# FASCICULE DE BREVET EUROPEEN

(11) **EP 1 599 925 B1**
(45) Date de publication et mention de la délivrance du brevet: **30.12.2009**
(21) Numéro de dépôt: 04716628.5
(22) Date de dépôt: 03.03.2004
(51) Int. Cl.: H02G 3/34

(54) **DISPOSITIF DE FIXATION D'UN FIL SUR UN ELEMENT PORTEUR MUNI D'AU MOINS DEUX OUVERTURES**
VORRICHTUNG ZUR BEFESTIGUNG EINES DRAHTES AUF EINEM TRÄGER MIT MINDESTENS ZWEI ÖFFNUNGEN
DEVICE FOR FIXING A WIRE ON A LOAD BEARING ELEMENT PROVIDED WITH AT LEAST TWO OPENINGS

(30) Priorité: 06.03.2003 FR 0302784
(43) Date de publication de la demande: 30.11.2005
(73) Titulaire: ICM Group, 21500 Montbard (FR)
(72) Inventeur: BOLTZ, Roland, F-60190 Estrees Saint Denis (FR); QUERTELET, Stéphane, F-60190 Remy (FR)
(74) Mandataire: Hartmann, Jean-Luc
(86) Numéro de dépôt international: PCT/FR2004/000498
(87) Numéro de publication internationale: WO 2004/081391

(56) Documents cités:
- EP-A- 0 725 467
- EP-A- 1 039 198

## Description

La présente invention a pour objet un dispositif de fixation permettant de fixer un fil sur un élément porteur muni d'au moins deux ouvertures.

Le problème se pose souvent d'avoir à fixer un fil sur un élément porteur. C'est le cas, par exemple, lorsqu'il s'agit de fixer une structure en treillis constituée de fils soudés. Une telle structure peut être, par exemple, un chemin de câbles en fils.

Ainsi qu'on le sait, ces chemins de câbles en fils comportent, sous forme maillée, des fils de deux types différents, à savoir, d'une part, des fils longitudinaux, communément appelés fils de chaîne, qui courent, longitudinalement, de manière rectiligne ou quasi rectiligne, sur toute leur longueur, et, d'autre part, établis transversalement de place en place le long de ces fils longitudinaux, en étant dûment assujettis à ceux-ci, des fils transversaux conformés en U, communément appelés fils de trame, l'ensemble formant globalement trois panneaux, en pratique plans ou sensiblement plans, à savoir, un panneau de fond et deux panneaux latéraux, communément appelés ailes.

Ces chemins de câbles en fils sont couramment utilisés pour assurer, à la manière d'une goulotte, le soutien, le logement et la protection de câbles électriques ou similaires.

Par câbles électriques, on entend ici, et dans ce qui suit, non seulement les câbles propres au transport et à la distribution de l'énergie électrique, mais aussi les câbles et fibres propres à une transmission d'information de manière électrique, optique ou autre.

A l'égard de tels câbles électriques, les chemins de câbles en fils ont de nombreux avantages qui les font apprécier des installateurs électriciens, et, notamment, des avantages de facilité de pose, et donc d'économie, de flexibilité, les câbles électriques pouvant en être sortis par l'une quelconque de leurs mailles, de transparence, et, donc, de repérage des câbles électriques, de ventilation, de propreté, de sécurité, tant pour les câbles électriques que pour les utilisateurs, et de performances.

Le document EP-0 725 467 révèle un dispositif de fixation pour l'assemblage de chemins de câbles en tôle d'acier. Ce dispositif est constitué d'une clé de verrouillage qui comprend un corps allongé déformable élastiquement, pourvu à chaque extrémité d'un moyen de fixation coopérant avec des trous oblongs ménagés dans le fond du chemin de câbles. Ces moyens de fixation permettent respectivement la tenue du chemin sur un support et le verrouillage de la clé sur le fond.

Le document EP-1 039 198 révèle quant à lui un élément de fixation pour une structure en treillis constituée de fils longitudinaux et transversaux. Cette structure repose, lorsqu'elle est montée, sur des consoles. Cet élément de fixation est constitué d'un clip formé de deux ailes disposées en V, calibrées pour être enfoncées dans un orifice présent sur une console. Les ailes précitées sont réalisées à partir d'une pièce en métal ou d'une matière présentant une élasticité analogue, chaque aile du clip étant prolongée par une lamelle qui est profilée de telle sorte dans le sens transversal qu'elles agrippent chacune d'une part un fil de la structure en treillis et d'autre part un rebord de l'orifice dans lequel l'élément a été enfoncé.

On a déjà proposé, pour fixer une telle structure en treillis, par exemple dans le document FR-A-2 697 690, de mettre en oeuvre un profilé de fixation présentant une surface plane adaptée à recevoir le fond du chemin de câbles et munie d'ergots aptes à venir coopérer avec les fils du fond du chemin de câbles.

Selon ce document, un profilé de fixation en tôle présente une surface plane sur laquelle repose, par ses fils de fond longitudinaux soudés à des fils transversaux en U, un chemin de câbles. La surface plane du profilé présente au moins deux ouvertures allongées d'où sont extraits, par découpage et pliage, les ergots. Ces derniers, avant que n'ait été effectuée l'opération de fixation proprement dite, sont conformés en une languette qui s'étend parallèlement à la surface plane du profilé, en étant à une distance, de cette surface plane, égale globalement au diamètre des fils de fond longitudinaux.

Pour fixer le chemin de câbles, on place celui-ci sur la surface plane du profilé, on le déplace en translation en sorte de placer les fils de fond sous les languettes des ergots jusqu'à ce qu'ils viennent en butée contre le raccordement de la languette à la surface plane du profilé. Bien entendu, les fils de fond se répétant à des intervalles prédéterminés, la position des ergots doit correspondre à ces intervalles. Pour terminer l'opération de fixation, il suffit de rabattre les languettes des ergots autour des fils de fond longitudinaux, vers la surface plane du profilé, à l'aide d'un outil quelconque, ou mieux à l'aide d'un outil adéquat.

Cette disposition donne satisfaction, s'agissant de fixer une structure du genre à treillis, mais présente plusieurs inconvénients : la profilé à ergots ne peut s'adapter qu'à un type de chemin de câbles en treillis de fils déterminé avec lequel il est destiné à coopérer, l'écartement entre ergots devant correspondre exactement à celui des fils longitudinaux du chemin de câbles. En outre, il est nécessaire de disposer de profils à ergots qui sont des profils spécifiques à un fournisseur.

La présente invention a pour but de pallier cet inconvénient. Elle a pour objet un dispositif de fixation d'un fil sur un élément porteur muni d'au moins deux ouvertures en sorte qu'un seul type d'élément porteur puisse convenir pour fixer au moins un fil, tel que les fils longitudinaux d'une structure en treillis.

On a également cherché à ce que le dispositif de fixation d'un fil puisse s'adapter à plusieurs types de structures en treillis dont les écartements des fils longitudinaux sont différents.

On a en outre cherché à ce que le dispositif de fixation puisse fonctionner quelle que soit la position de l'élément porteur et à ce que l'opération de fixation soit encore plus simple que précédemment.

Selon l'invention, un dispositif de fixation, utilisable pour la fixation d'un fil sur un élément porteur ayant une face plane munie d'au moins deux ouvertures, est caractérisé par le fait qu'il est en tôle élastique et comporte un corps découpé et plié en forme générale de U comprenant une âme et deux ailes dont l'extrémité est en forme de T, au moins un bras du T de chaque extrémité étant adapté à prendre appui sur la face de l'élément porteur opposée à la face plane, au bord d'une ouverture.

Dans une forme de réalisation, chaque ouverture comprend une partie de forme globalement circulaire dans laquelle débouche une zone étroite de forme allongée. Dans cette forme de réalisation, la barre transversale du T de chacune des ailes a par exemple une largeur mesurée transversalement supérieure à la largeur de la zone étroite de chaque ouverture.

De préférence, pour que l'opération de fixation soit simple, la barre transversale du T de chacune des ailes présente sur son bord d'extrémité un pan incliné facilitant son introduction dans une ouverture.

Pour s'adapter à diverses surfaces planes, la barre transversale du T de chacune des ailes présente avantageusement d'un côté sur son bord tourné vers le pied du T une échancrure définissant un doigt.

Pour permettre un accrochage, la barre transversale du T présente, par exemple, sur un côté un retour à quatre-vingt dix degrés dirigé vers l'aile opposée. De préférence, le retour présente sur son bord d'extrémité un pan incliné facilitant l'introduction de l'aile dans une ouverture. Ce retour peut présenter sur son bord tourné vers le pied une dent d'accrochage pour permettre une meilleure fixation.

Une forme de réalisation prévoit que l'âme présente centralement, sur au moins une partie de sa longueur, une forme en V très ouvert dont le fond présente une gouttière adaptée à recevoir le fil à fixer.

Selon une forme particulière d'application du dispositif de fixation selon l'invention, celui-ci est destiné à la fixation d'une structure en treillis conformée en chemin de câbles.

L'élément porteur est, par exemple, un profilé formant une équerre, une console, un pendard, une balancelle ou autre, pour fixer le chemin de câbles sur une paroi verticale, sur des poteaux, à partir d'un plafond, la fixation pouvant s'effectuer sur les fils de fond du chemin de câbles ou sur les fils de côté.

La présente invention concerne également un ensemble porteur pour chemin de câbles en treillis de fils, constitué par l'association d'un élément porteur ayant au moins une ouverture sur une face plane et d'au moins un dispositif de fixation selon l'invention.

Préférentiellement, l'élément porteur est un profilé en forme de U dont l'âme porte la face plane munie des ouvertures. Les bords libres des ailes ou retours du profilé présentent avantageusement un rebord définissant des canaux adaptés à recevoir les doigts du dispositif de fixation. De cette manière une fixation est envisageable sur l'âme du profilé et aussi sur la face opposée de ce profilé.

Pour mieux faire comprendre l'invention, on va en décrire maintenant, à titre d'exemple, purement illustratif et non limitatif, un mode de réalisation représenté sur le dessin annexé.

Sur ce dessin :
- la figure 1 est une vue en perspective d'un dispositif de fixation selon l'invention,
- la figure 2 est une vue en élévation, selon la flèche Il de la figure 1,
- la figure 3 est une vue en coupe selon la ligne de coupe III - III de la figure 1,
- la figure 4 est une vue schématique en perspective, partiellement en coupe, montrant l'application du dispositif des figures 1 à 3 à la fixation d'un chemin de câbles en treillis, et
- la figure 5 est une analogue à la figure 4 montrant la fixation d'un chemin de câbles en treillis par le dispositif selon l'invention sur la face ouverte du profilé de la figure 4.

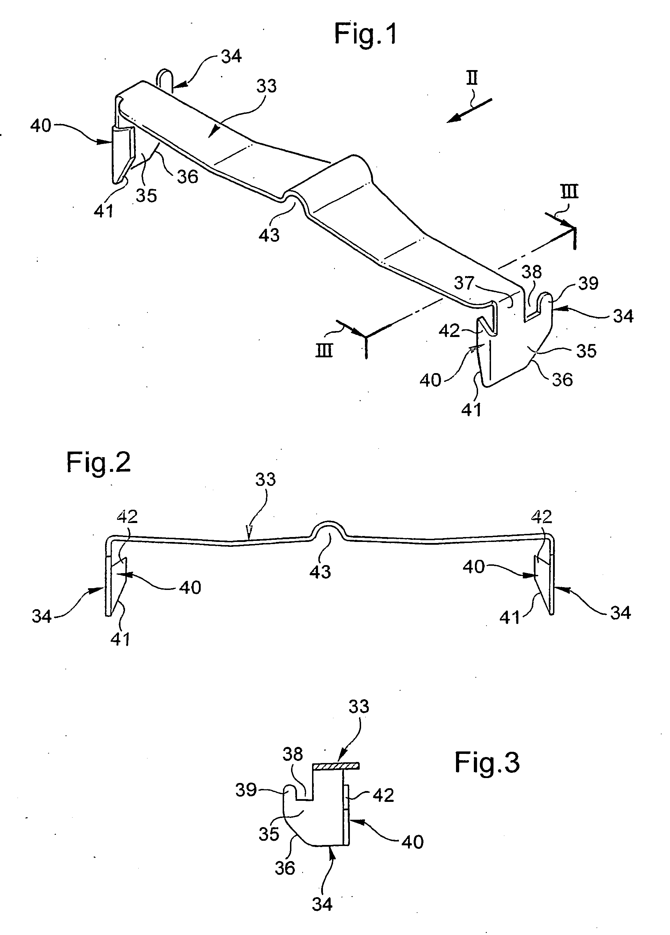

Les figures 1 à 3 montrent un dispositif de fixation selon l'invention. Ce dispositif comporte un corps découpé et plié en forme générale de U comprenant une âme 33 et deux ailes 34.

Chacune des ailes 34 a son extrémité en forme de T. La barre transversale 35 du T présente sur son bord tourné vers le pied 37 du T, une échancrure 38 définissant un doigt 39 et, sur son bord opposé d'extrémité, un pan incliné 36.

De l'autre côté, par rapport au pied 37, la barre transversale 35 du T présente, du côté donc transversalement opposé au doigt 39, un retour 40 à quatre-vingt dix degrés, dirigé vers l'aile opposée 34.

Le retour 40 présente, sur son bord d'extrémité, un pan incliné 41 et, sur son bord tourné vers le pied 37 du T, une dent 42 dite d'accrochage.

L'âme 33 du corps du dispositif de fixation présente centralement, sur au moins une partie de sa longueur, une forme en V très ouvert, à concavité dirigée vers les ailes 34 dudit corps, dont le fond présente une gouttière 43 adaptée à recevoir le fil 10 à fixer.

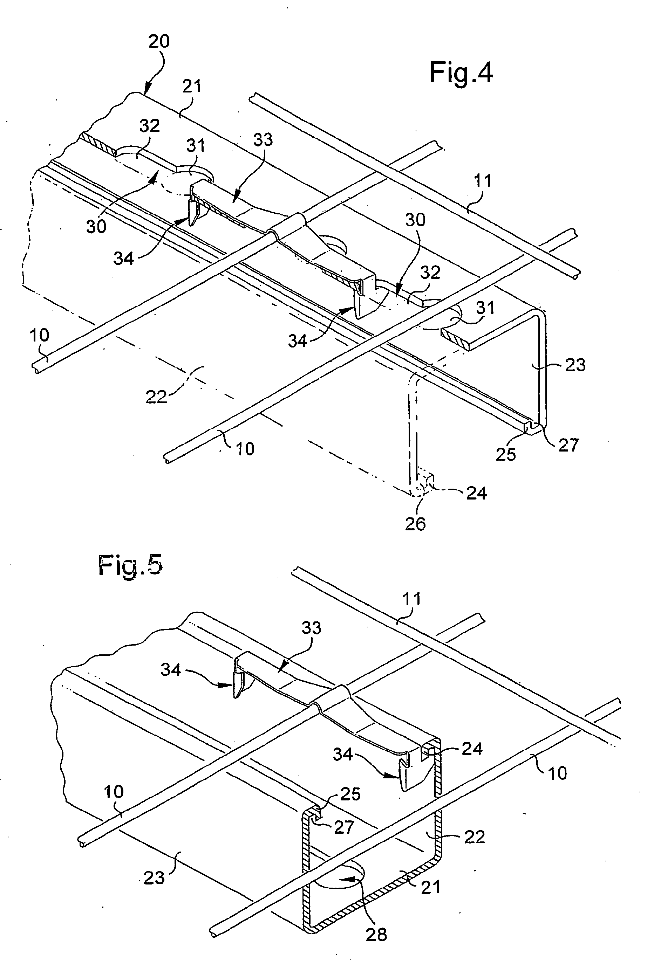

La figure 4 montre un élément porteur 20 qui est un profilé à section en U ayant une face plane 21 et deux retours 22, 23 parallèles entre eux et perpendiculaires à la face plane 21. Ce profilé est utilisé en général pour porter à fixation une structure globalement pleine ou en treillis. Sa face plane 21 est munie de deux ouvertures 30.

Chaque ouverture 30 comprend une partie 31 de forme globalement circulaire dans laquelle débouche une zone étroite 32 de forme allongée.

La barre transversale 35 du T de chacune des ailes 34 du dispositif de fixation a une largeur mesurée transversalement supérieure à la largeur de la zone étroite 32 de chaque ouverture 30.

Le dispositif de fixation selon l'invention est adapté à fixer sur ce profilé 20 un fil 10, plus précisément une structure en treillis telle qu'un chemin de câbles représenté ici par deux fils longitudinaux 10 et un fil transversal 11 définissant en partie le fond du chemin de câbles.

La mise en oeuvre du dispositif de fixation selon l'invention résulte de la description ci-dessus. Après avoir placé le fil à fixer sur la face plane 21 du profilé 20 (figure 4), on pose sur celui-ci, transversalement, le dispositif de fixation dont une extrémité est introduite dans la zone circulaire 31 d'une ouverture 30 (celle de droite sur la figure 4), l'aile 34 de cette extrémité prenant place dans cette zone circulaire 31, du côté opposé à la face plane 21. Le fil 10 ayant pris place dans la gouttière 43, il suffit de pousser latéralement le dispositif de fixation de façon à ce que l'extrémité considérée vienne en regard de la zone étroite 32 et à ce que l'autre extrémité du dispositif de fixation soit introduite dans la zone circulaire 31 d'une autre ouverture 30 (celle de gauche sur la figure 4), cette opération étant facilitée par le pan incliné 36. La dent 42 et le doigt 39 de chaque extrémité du dispositif de fixation prennent alors appui sur la face intérieure de l'élément porteur 20.

Il est possible de remplacer les ouvertures présentant une zone circulaire 31 et une zone étroite 32 par des ouvertures oblongues de largeur égale au diamètre de la zone circulaire et de même longueur.

Un autre avantage du dispositif de liaison selon l'invention résulte du fait que, les bords libres des ailes ou retours 22, 23 du profilé 20 présentant un rebord 24, 25 définissant des canaux 26 et 27, le dispositif de liaison peut être utilisé pour la fixation d'une structure en treillis sur les bords libres des ailes 22, 23 du profilé, comme illustré sur la figure 5, les doigts 39 du dispositif de liaison étant alors reçus dans les canaux 26, 27. On notera qu'ici cette fixation peut être réalisée en un endroit quelconque du profilé, selon son axe, et quel que soit l'écart entre les fils longitudinaux 10.

## Revendications

1. Dispositif de fixation en tôle élastique, utilisable pour la fixation d'un fil (10) sur un élément porteur (20) ayant une face plane (21) munie d'au moins deux ouvertures (30), ledit dispositif de fixation comportant un corps découpé et plié en forme générale de U comprenant une âme (33) et deux ailes (34), **caractérisé par le fait que** l'extrémité des deux ailes est en forme de T, au moins un bras du T de chaque extrémité étant adapté à prendre appui sur la face de l'élément porteur (20) opposée à la face plane (21), au bord d'une ouverture (30).

2. Dispositif de fixation selon la revendication 1, **caractérisé par le fait que** chaque ouverture (30) comprend une partie de forme globalement circulaire (31) dans laquelle débouche une zone étroite (32) de forme allongée.

3. Dispositif de fixation selon la revendication 2, **caractérisé par le fait que** la barre transversale (35) du T de chacune des ailes (34) a une largeur mesurée transversalement supérieure à la largeur de la zone étroite (32) de chaque ouverture (30).

4. Dispositif de fixation selon l'une des revendications 1 à 3, **caractérisé par le fait que** la barre transversale (35) du T de chacune des ailes (34) présente sur son bord d'extrémité un pan incliné (36) facilitant son introduction dans une ouverture (30).

5. Dispositif de fixation selon l'une des revendications 1 à 4, **caractérisé par le fait que** la barre transversale (35) du T de chacune des ailes (34) présente d'un côté sur son bord tourné vers le pied (37) du T une échancrure (38) définissant un doigt (39).

6. Dispositif de fixation selon l'une des revendications 1 à 5, **caractérisé par le fait que** la barre transversale (35) du T présente d'un côté un retour (40) à quatre-vingt dix degrés dirigé vers l'aile opposée (34).

7. Dispositif de fixation selon la revendication 6, **caractérisé par le fait que** le retour (40) présente sur son bord d'extrémité un pan incliné (41) facilitant l'introduction de l'aile (34) dans une ouverture (30).

8. Dispositif de fixation selon l'une des revendications 6 ou 7, **caractérisé par le fait que** le retour (40) présente sur son bord tourné vers le pied (37) une dent (42) d'accrochage.

9. Dispositif de fixation selon l'une des revendications 1 à 8, **caractérisé par le fait que** l'âme (33) présente centralement, sur au moins une partie de sa longueur, une forme en V très ouvert dont le fond présente une gouttière (43) adaptée à recevoir le fil (10) à fixer.

10. Dispositif de fixation selon l'une des revendications 1 à 9, **caractérisé par le fait qu'**il est destiné à la fixation d'une structure en treillis conformée en chemin de câbles.

11. Ensemble porteur pour chemin de câbles en treillis de fils, constitué par l'association d'un élément porteur (20) ayant au moins deux ouvertures (30) sur une face plane (21) et d'au moins un dispositif de fixation selon la revendication 10.

12. Ensemble porteur selon la revendication 11, **caractérisé par le fait que** l'élément porteur (20) est un profilé en forme de U dont l'âme porte la face plane munie des ouvertures (30).

13. Ensemble porteur selon la revendication 12, **caractérisé par le fait que** les bords libres des ailes ou retours (22, 23) du profilé (20) présentent un rebord (24, 25) définissant des canaux (26, 27) adaptés à recevoir les doigts (39) du dispositif de fixation.

## Claims

1. Fixing device of elastic sheet-metal that can be used to fix a wire (10) to a support member (20) having a planar surface (21) provided with at least two openings (30), said fixing device comprising a body which is cut out and bent into the general shape of a U comprising a web (33) and two flanges (34), **characterized by** the fact that the end of the two flanges is T-shaped, at least one arm of the T of each end being adapted to bear on the opposite surface of the support member (20) to the planar surface (21), at the edge of an opening (30).

2. Fixing device according to claim 1, **characterized by** the fact that each opening (30) has a portion (31) of circular general shape into which opens a narrow zone (32) of elongate shape.

3. Fixing device according to claim 2, **characterized by** the fact that the crossbar (35) of the T of each of the flanges (34) has a transverse width greater than the width of the narrow zone (32) of each opening (30).

4. Fixing device according to one of claims 1 to 3, **characterized by** the fact that the crossbar (35) of the T of each of the flanges (34) has on its end edge an inclined portion (36) to facilitate inserting it into an opening (30).

5. Fixing device according to one of claims 1 to 4, **characterized by** the fact that the crossbar (35) of the T of each of the flanges (34) has on one side on its edge turned toward the stem (37) of the T a notch (38) defining a finger (39).

6. Fixing device according to one of claims 1 to 5, **characterized by** the fact that the crossbar (35) of the T has on one side a 90° folded portion (40) directed toward the opposite flange (34).

7. Fixing device according to claim 6, **characterized by** the fact that the folded portion (40) has an inclined portion (41) on its end edge to facilitate inserting the flange (34) into an opening (30).

8. Fixing device according to either claim 6 or claim 7, **characterized by** the fact that the folded portion (40) has, on its end edge that is turned towards toward the stem (37), a fastening tooth (42).

9. Fixing device according to one of claims 1 to 8, **characterized by** the fact that the web (33) has over at least a portion of its length a central and very wide V-shape whose bottom includes a trough (43) adapted to receive the wire (10) to be fixed.

10. Fixing device according to one of claims 1 to 9, **characterized by** the fact that it is adapted for fixing a mesh structure conformed as a cable tray.

11. Support assembly for a wire mesh cable tray comprising the combination of a support member (20) having at least two openings (30) on a planar surface (21) and at least one fixing device according to claim 10.

12. Support assembly according to claim 11, **characterized by** the fact that the support member (20) is a U-section whose web incorporates the planar surface provided with openings (30).

13. Support assembly according to claim 12, **characterized by** the fact that the free edges of the flanges or folded portions (22, 23) of the section (20) have a rim (24, 25) defining channels (26, 27) adapted to receive the fingers (39) of the fixing device.

## Patentansprüche

1. Befestigungsvorrichtung aus elastischem Blech, verwendbar zur Befestigung eines Drahtes (10) auf einem Trägerelement (20) mit einer ebenen Fläche (21), die mit mindestens zwei Öffnungen (30) versehen ist, wobei die Befestigungsvorrichtung einen ausgeschnittenen und im Wesentlichen zu einem U gebogenen Körper mit einem Mittelteil (33) und zwei Armen (34) aufweist,
**dadurch gekennzeichnet, dass**
die freien Enden der beiden Arme T-förmig ausgebildet sind und mindestens ein Arm des Ts an jedem Ende so ausgeformt ist, dass es auf der Fläche des Trägerelements (20) gegenüber der ebenen Fläche (21) am Rand einer Öffnung (30) aufliegt.

2. Befestigungsvorrichtung nach Anspruch 1,
**dadurch gekennzeichnet, dass**
jede Öffnung (30) einen im Wesentlichen kreisrunden Teil (31) aufweist, in dem ein gerader länglicher Bereich (32) mündet.

3. Befestigungsvorrichtung nach Anspruch 2,
**dadurch gekennzeichnet, dass**
der Querbalken (35) des Ts eines jeden Arms (34) eine transversal gemessene Breite aufweist, die größer ist als die Breite des geraden Bereichs (32) einer jeden Öffnung (30).

4. Befestigungsvorrichtung nach einem der Ansprüche 1 bis 3,
**dadurch gekennzeichnet, dass**
der Querbalken (35) des Ts eines jeden Arms (34) eine abgeschrägte Fläche (36) aufweist, die dessen Einführung in eine Öffnung (30) erleichtert.

5. Befestigungsvorrichtung nach einem der Ansprüche 1 bis 4,
**dadurch gekennzeichnet, dass**
der Querbalken (35) des Ts eines jeden Arms (34) auf der Seite seines zum Fuß (37) gebogenen Randes eine Ausnehmung (38) aufweist, die einen Finger (39) definiert.

6. Befestigungsvorrichtung nach einem der Ansprüche 1 bis 5
**dadurch gekennzeichnet, dass**
der Querbalken (35) des Ts auf einer Seite eine Rückführung (40) von 90 ° aufweist, die auf de gegenüberliegenden Arm (34) gerichtet ist.

7. Befestigungsvorrichtung nach Anspruch 6,
**dadurch gekennzeichnet, dass**
die Rückführung (40) an ihrem Endrand eine abgeschrägte Fläche (41) aufweist, die die Einführung des Arms (34) in eine Öffnung (30) erleichtert.

8. Befestigungsvorrichtung nach einem der Ansprüche 6 oder 7,
**dadurch gekennzeichnet, dass**
die Rückführung (40) an ihrem zu dem Fuß (37) hin gebogenen Rand einen Befestigungshake (42) aufweist.

9. Befestigungsvorrichtung nach einem der Ansprüche 1 bis 8,
**dadurch gekennzeichnet, dass**
der Mittelteil (33) zumindest auf einem Teil seiner Länger eine weit offene V-Form aufweist, dessen Boden eine Rinne (43) zur Aufnahme des zu befestigen Drahtes (10) aufweist.

10. Befestigungsvorrichtung nach einem der Ansprüche 1 bis 9
**dadurch gekennzeichnet, dass**
sie zur Befestigung eines Drahtgeflechts für Kabellänge bestimmt ist.

11. Trägereinrichtung für Kabelwege aus Drahtgeflechten, bestehend aus einer Verbindung eines Trägerelements (20) mit mindestens zwei Öffnungen (30) auf einer ebenen Fläche (21) und mindestens einer Befestigungsvorrichtung nach Anspruch 10.

12. Trägeranordnung nach Anspruch 11,
**dadurch gekennzeichnet, dass** das Trägerelement (20) ein U-förmiges Profil ist, dessen Mittelteil die ebene Fläche mit den Öffnungen (30) aufweist.

13. Trägeranordnung nach Anspruch 11,
**dadurch gekennzeichnet, dass**
die freien Ränder der Arme (22, 23) des Profilteils (20) eine Kante (24, 25) aufweist, die die Kanäle (26, 27) definiert, die zur Aufnahme der Finger (39) der Befestigungsvorrichtung dienen.
